**Europäisches Patentamt**

**European Patent Office**

**Office européen des brevets**

(19)

(11) Veröffentlichungsnummer : **0 016 297 B1**

(12) **EUROPÄISCHE PATENTSCHRIFT**

(45) Veröffentlichungstag der Patentschrift :
**28.04.82**

(21) Anmeldenummer : **79890058.5**

(22) Anmeldetag : **11.12.79**

(51) Int. Cl.³ : **E 21 D   9/10, G 05 D   1/02**

(54) **Einrichtung zur Kontrolle der Position einer Streckenvortriebsmaschine.**

(30) Priorität : **14.03.79 AT 1920/79**

(43) Veröffentlichungstag der Anmeldung :
**01.10.80 (Patentblatt 80/20)**

(45) Bekanntmachung des Hinweises auf die Patenterteilung : **28.04.82 Patentblatt 82/17**

(84) Benannte Vertragsstaaten :
**DE FR GB SE**

(56) Entgegenhaltungen :
**DE - A - 2 511 419**
**DE - B - 1 623 617**
**DE - B - 1 913 399**
**DE - B - 1 806 450**
**DE - B - 2 009 360**
**DE - C3 - 1 473 931**
**FR - A - 2 398 877**
**GB - A - 1 302 598**
**GB - A - 1 501 113**
**SU - A - 613 104**
**US - A - 3 707 330**

(73) Patentinhaber : **VOEST-ALPINE Aktiengesellschaft**
**Friedrichstrasse 4**
**A-1011 Wien (AT)**

(72) Erfinder : **Dröscher, Bernhard, Dipl.Ing.**
**Erzstrasse 14**
**A-8740 Zeltweg (AT)**
Erfinder : **Zitz, Alfred**
**Granitzenweg 13b**
**A-8740 Zeltweg (AT)**

(74) Vertreter : **Kretschmer, Adolf, Dipl.-Ing.**
**Schottengasse 3a**
**A-1014 Wien (AT)**

Imprimerie Jouve, 18, rue St-Denis, 75001 Paris, France

Einrichtung zur Kontrolle der Position einer Streckenvortriebsmaschine

Die Erfindung bezieht sich auf eine Einrichtung zur Kontrolle der Position einer Streckenvortriebsmaschine unter Verwendung von in Abstand hinter der Streckenvortriebsmaschine ausgesandten Licht- oder Laserstrahlen, mit zwei auf der Streckenvortriebsmaschine in deren Längsachse hintereinander angeordneten Licht- oder Laserempfängern, die über eine Meßvorrichtung mit Anzeigevorrichtungen verbunden sind.

Es sind bereits eine Reihe solcher Einrichtungen bekannt geworden, bei welchen in der Regel eine Laserquelle ortsfest im Streckenquerschnitt angeordnet wurd und über komplexe und aufwendige und dadurch auch teilweise störanfällige Schaltungen Informationen über die Position der Streckenvortriebsmaschine verarbeitet wurden. Es sind weiters auch Einrichtungen bekannt, die die Arbeitsbewegung des Lösewerkzeuges unter Berücksichtigung der Stellung der Streckenvortriebsmaschine steuern bzw. begrenzen. Dies sind beispielsweise sogenannte Schablonensteuerungen, mittels derer die Istlage des Lösewerkzeuges zur Sollage des Streckenprofiles darstellbar und somit zu kontrollieren ist. Auch diese Einrichtungen sind sehr aufwendig und dadurch naturgemäß auch störanfällig.

Eine Einrichtung der eingangs genannten Art ist beispielsweise aus der DE-C 1 473 931 bekannt geworden. Bei dieser bekannten Ausbildung konnte ohne Verstellung der Empfänger auf der Streckenvortriebsmaschine lediglich eine Abweichung der Maschine aus der durch den Laserstrahl vorgegebenen Achse ermittelt werden. Für weitere Feststellungen von Abweichungen waren aufwendige servomotorische Folgesteuerungen erforderlich, deren hoher mechanischer Aufwand mit einer entsprechenden Störanfälligkeit verbunden war.

Die vorliegende Erfindung zielt nun darauf ab, eine besonders einfache und betriebssichere Einrichtung zur Kontrolle der Position einer Streckenvortriebsmaschine zu schaffen, mit welcher Abweichungen der Lage der Maschine von einer Sollage durch Auslösung eines Signals oder durch optische Kontrolle erkennbar gemacht werden, worauf dann die erforderlichen Korrekturmaßnahmen gesetzt werden können.

Zur Lösung dieser Aufgabe ist die Erfindung im wesentlichen dadurch gekennzeichnet, daß zwei Licht- oder Laserquellen in Querrichtung zur Streckenachse in einer durch letztere abweichend von der Vertikalebene gelegten Ebene in Abstand voneinander versetzt angeordnet sind, die zueinander und zur Streckenachse parallele Strahlen aussenden, und daß die zwei Licht- oder Laserempfänger auf der Streckenvortriebsmaschine auch quer zur Streckenvortriebsmaschinenlängsachse versetzt angeordnet sind und ihre seitliche Versetzung dem Abstand der ausgesendeten Strahlen voneinander entspricht.

Bei Streckenvortriebsmaschinen können Abweichungen von der Sollage auf eine horizontale Parallelabweichung, eine vertikale Parallelabweichung, eine Schrägstellung zur Streckenachse, einen Steig-bzw. Gefällwinkel oder auf einen Rollwinkel der Maschine zurückgehen. Durch die erfindungsgemäße Einrichtung werden alle diese Fehlstellungen in einfacher Weise erkennbar, wobei eine Parallelverschiebung der Streckenvortriebsmaschine zur Streckenachse zu einem Ausbleiben des Signals beider Empfänger führt. Eine Schrägstellung der Maschine zeichnet sich dann ab, wenn einer der beiden Empfänger kein Signal mehr empfängt. Steigung bzw. Gefälle können ebenso wie der Rollwinkel durch Ausbleiben des Signals beider Empfänger, sowie Kontrolle einer konventionellen Einrichtung, wie beispielsweise eines Winkelkodierers, eines Schwerkraftinklinometers oder einer Flüssigkeitswaage, ermittelt werden. Eine vertikale Parallelabweichung wird durch Ausbleiben des Signals in beiden Empfängern festgestellt, wobei die Kontrolle einer Wasserwaage od.dgl. keine Abweichung ergibt. Durch die erfindungsgemäße Einrichtung lassen sich somit mit geringstem Aufwand alle möglichen Fehlstellungen der Streckenvortriebsmaschine ermitteln.

Zur Erzielung einer größeren Empfindlichkeit der erfindungsgemäßen Einrichtung auf Abweichungen der Sollage ist die Ausbildung so getroffen, daß die auf der Streckenvortriebsmaschine angeordneten Empfänger in Längsrichtung der Streckenvortriebsmaschine versetzt angeordnet sind. Die versetzte Anordnung der Empfänger in Längsrichtung der Streckenvortriebsmaschine führt dazu, daß bereits geringe Abweichungen aus der Sollage, insbesondere geringe Schrägstellung zur Streckenachse, zu einem Signal, welches die Fehlstellung der Maschine anzeigt, führt. Vorzugsweise ist die Ausbildung hiebei so getroffen, daß einer der beiden Empfänger auf der Streckenvortriebsmaschine nahe dem Schwerpunkt bzw. der vertikalen Drehachse der Streckenvortriebsmaschine, vorzugsweise in der Drehachse, angeordnet ist. Auf diese Weise wird eine geringe Schrägstellung der Streckenvortriebsmaschine dadurch manifest, daß der dem Schwerpunkt bzw. der vertikalen Drehachse der Streckenvortriebsmaschine entfernter liegende Empfänger kein Signal registriert. Dadurch, daß der eine der beiden Empfänger nahe dem Schwerpunkt angeordnet ist, ist das Wiederauffinden der korrekten Sollage der Maschine in einfacher Weise möglich, da nur der zweite Empfänger wiederum auf den zweiten Licht- oder Laserstrahl ausgerichtet werden muß. Vorzugsweise sind die in Abstand hinter der Streckenvortriebsmaschine in der Strecke angeordneten Licht- oder Laserquellen in einer Horizontalebene des gleichen Streckenquerschnittes und die an der Streckenvortriebsmaschine angeordneten Empfänger in einer zur Lauffläche der Maschine parallelen Ebene angeordnet, wodurch eine einfache Justierung der erfindungsgemäßen Einrichtung möglich wird.

Die erfindungsgemäße Einrichtung soll eine gewisse Toleranz für Fehlstellungen zulassen und die Ausbildung ist hiefür vorzugsweise so getroffen, daß die Empfänger mit einem parabolischen Reflektor ausgestattet sind und der Licht- oder Laserstrahldetektor im Brennpunkt des Reflektors angeordnet ist. Auf diese Weise wird ein einfacher Aufbau des Empfängers ermöglicht, welcher erst dann Signale für die Fehlstellung auslöst, wenn tatsächlich Korrekturen erforderlich sind. Zur Erleichterung der Ausführung der Korrekturen sind die Empfänger so ausgebildet, daß sie von konzentrischen Flächen aus durchscheinendem Material, beispielsweise einer Mattscheibe aus Glas oder Kunststoff, umgeben sind. Auf diese Weise wird ein vom jeweiligen Empfänger nicht mehr registriertes Signal der Licht- oder Laserquelle auf den konzentrischen Flächen um den Empfänger herum als Lichtpunkt sichtbar und dieser Lichtpunkt kann sowohl vor als auch hinter der Maschine gesehen werden, da die konzentrischen Flächen aus durchscheinendem Material ausgebildet sind. Diese konzentrischen Flächen haben auf diese Weise die Funktion von Kontrollflächen, welche die Art der Abweichung unmittelbar sichtbar machen. Das Maß der zulässigen Abweichungen wird vorzugsweise durch geeignete Dimensionierungen des parabolischen Reflektors des Empfängers festgelegt, welcher vorzugsweise einen Durchmesser von etwa 20 cm aufweist und von einer kreisringförmigen Mattscheibe umgeben ist.

Zur Auslösung eines optischen oder akustischen Signals sind die Empfänger in vorteilhafter Weise mit einer Meßvorrichtung mit optischen oder akustischen Anzeigeeinrichtungen verbunden. Um die sichere Zuordnung des ausgelösten Signals zu der tatsächlichen Abweichung von der Sollage zu erleichtern bzw. um für Steig- und Gefällwinkel sowie Rollwinkel eine größere Genauigkeit zu erreichen, sind vorzugsweise zusätzlich zu den Licht- oder Laserempfängern Schwerkraftinklinometer (beispielsweise Drehpotentiometer oder Winkelkodierer), welche gleichfalls mit der Meßvorrichtung verbunden sind, und/oder Flüssigkeitswaagen an der Streckenvortriebsmaschine angeordnet.

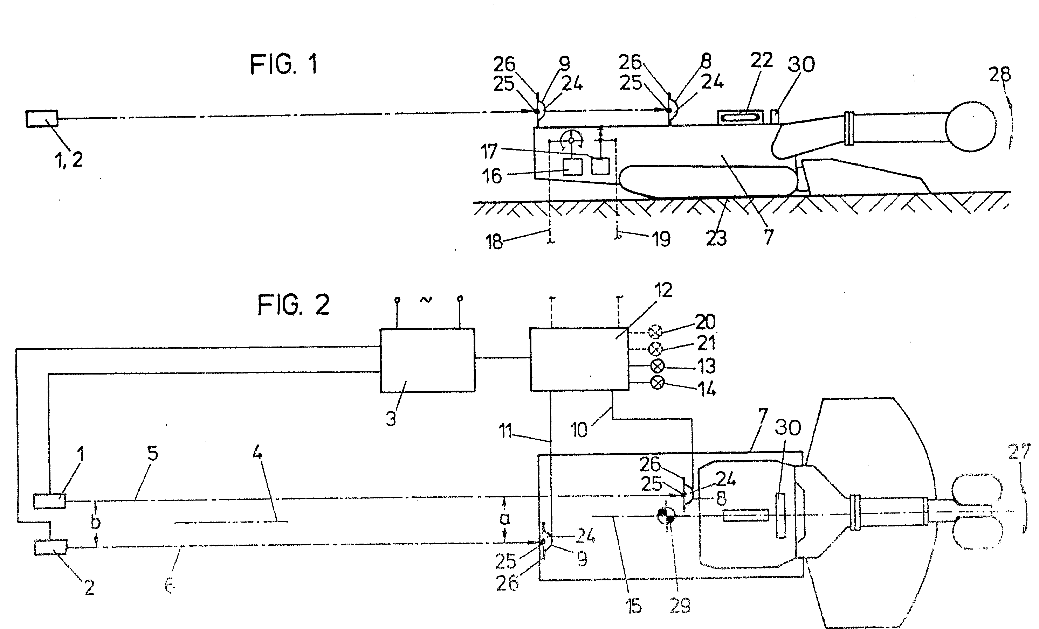

Die Erfindung wird nachfolgend an Hand einer in der Zeichnung schematisch dargestellten Ausführungsform näher erläutert. In dieser zeigen Fig. 1 einen Längsriß durch eine Strecke mit der erfindungsgemäßen Kontrolleinrichtung und Fig. 2 eine Draufsicht auf die Anordnung nach Fig. 1.

Die im Streckenquerschnitt angeordneten Laserquellen sind in Fig. 2 mit 1 und 2 bezeichnet und werden von einer Schaltung 3 mit Energie versorgt. Aus den Lasern 1 und 2 werden parallel zur Streckenachse 4 Laserstrahlen 5 und 6 ausgesandt, welche von den an der Streckenvortriebsmaschine 7 angeordneten Empfängern 8 und 9 registriert werden, wenn sich die Streckenvortriebsmaschine 7 in der Sollage befindet. Die Empfänger 8 und 9 sind über Leitungen 10 und 11 mit einer Meßvorrichtung 12 verbunden, an welche Anzeigelampen 13 und 14 angeschlossen sind. Die Empfänger sind hiebei aus der Längsachse 15 der Streckenvortriebsmaschine 7 in Querrichtung versetzt angeordnet und ihr Seitenabstand a entspricht dem Abstand b der aus den Lasern 1 und 2 parallel zur Streckenachse 4 austretenden Strahlen 5 und 6.

Wie in Fig. 1 ersichtlich, sind an der Streckenvortriebsmaschine 7 Schwerkraftinklinometer 16 und 17 angeordnet, deren Signale über Leitungen 18 und 19 gleichfalls der Meßvorrichtung 12 zugeführt sein können, wobei zusätzlich Anzeigelampen 20 und 21 vorgesehen sein können. Auf der Streckenvortriebsmaschine 7 können zusätzlich oder anstelle der Inklinometer Flüssigkeitswaagen 22 und 30 angeordnet sein. Wie aus Fig. 1 ersichtlich, sind die Empfänger 8 und 9 in Längsrichtung der Streckenvortriebsmaschine versetzt angeordnet, wobei der Empfänger 8 nahe dem Schwerpunkt 29 der Streckenvortriebsmaschine angeordnet ist. Die Empfänger 8 und 9 sind hiebei in einer Ebene angeordnet, welche parallel zu der durch die Laufflächen 23 der Raupen des Fahrwerkes der Streckenvortriebsmaschine definierten Ebene liegt. In dieser Ebene sollen auch die Laserstrahlen 5 und 6 liegen, um eindeutige Zuordnungen und eine einfache Justierung zu erlauben.

Die Empfänger 8 und 9 weisen parabolisch geformte Reflektoren 24 auf. Im Brennpunkt dieser parabolischen Reflektoren 24 befindet sich jeweils der Licht- oder Laserdetektor 25. Um die parabolischen Reflektoren herum sind konzentrische Ringscheiben 26 aus transparentem Material, beispielsweise aus PVC, angeordnet. Bei Abweichungen der Streckenvortriebsmaschine 7 aus ihrer Sollage in einem Ausmaß, in welchem die Laserstrahlen 5 und 6 nicht mehr auf eine Stelle des parabolischen Reflektors 24 auftreten, wird ein entsprechendes Signal der Anzeigelampen 13 oder 14 oder ein akustisches Signal ausgelöst. Gleichzeitig ist die Art der Abweichung durch das Auftreten eines Lichtpunktes auf die konzentrische Ringfläche 26 ersichtlich, wobei dieser Lichtpunkt sowohl hinter als auch vor der Maschine erkannt werden kann.

Bei einer Schrägstellung der Maschine in Richtung des Doppelpfeiles 27 der Fig. 2 wird nun zuerst der parabolische Reflektor 24 des Empfängers 9 aus dem Laserstrahl 6 austauchen und damit ein entsprechendes Signal, beispielsweise der Anzeigelampe 14, auslösen. In welche Richtung des Doppelpfeiles 27 die Schrägstellung erfolgt ist, läßt sich unmittelbar an der Stelle der als Kontrollfläche wirkenden Ringscheibe 26 ablesen, welche nunmehr einen Lichtpunkt zeigt. Bei Steigung oder Gefälle wird die Streckenvortriebsmaschine 7 im Sinne des Doppelpfeiles 28 der Fig. 1 von ihrer Sollstellung abweichen. Auch hier wird wiederum zuerst der Empfänger 9 das Fehlen eines Signals melden, da ja der Empfänger 8 näher dem Schwerpunkt der Maschine und den Raupen-Auflageflächen angeordnet ist. Ob es sich um eine Abweichung nach oben oder unten handelt, ist wiederum in einfacher Weise an der Ringfläche 26, welche den parabolischen Reflektor 24 des Empfängers 9 umgibt, bzw. an der Flüssigkeitswaage 22 oder am Inklinometer 16, erkenntlich. Parallelversetzungen der Maschine 7 in Höhen- oder Seitenrichtung werden durch Ausfallen der Signale in beiden Empfängern 8 und 9 erkennbar, wobei sich die Richtung der Parallelversetzung aus den jeweils auf die gleiche Seite der parabolischen Reflektoren 24 liegenden Teilbereichen der Ringflächen 26 ergibt, da in diesen Teilbereichen der beiden Ringflächen 26 nunmehr ein Lichtpunkt erkennbar wird. Der Rollwinkel kann in einfacher Weise vom Schwerkraftkinklinometer 17 oder der Flüssigkeitswaage 30 angezeigt werden, wobei solche Abweichungen aus der Sollage nicht notwendigerweise bereits zu einem Signal der Empfänger 8 oder 9 führen. Dieses Signal wird vielmehr erst dann auftreten, wenn bereits eine bedeutende Fehlstellung der Maschine eingetreten ist und es sind daher die Signale des Winkelkodierers bzw. des Schwerkraftinklinometers gleichfalls der akustischen oder optischen Kontrolleinrichtung zugeführt, um rechtzeitig Korrekturmaßnahmen setzen zu können.

**Ansprüche**

1. Einrichtung zur Kontrolle der Position einer Streckenvortriebsmaschine unter Verwendung von in Abstand hinter der Streckenvortriebsmaschine ausgesandten Licht- oder Laserstrahlen, mit zwei auf der Streckenvortriebsmaschine in deren Längsachse hintereinander angeordneten Licht- oder Laserempfängern (8, 9), die über eine Meßvorrichtung (12) mit Anzeigevorrichtungen (13, 14, 20, 21) verbunden sind, dadurch gekennzeichnet, daß zwei Licht- oder Laserquellen (1, 2) in Querrichtung zur Streckenachse in einer durch letztere abweichend von der Vertikalebene gelegten Ebene in Abstand voneinander versetzt angeordnet sind, die zueinander und zur Streckenachse (4) parallele Strahlen (5, 6) aussenden, und daß die zwei Licht- oder Laserempfänger (8, 9) auf der Streckenvortriebsmaschine (7) auch quer zur Streckenvortriebsmaschinenlängsachse (15) versetzt angeordnet sind und ihre seitliche Versetzung (a) dem Abstand (b) der ausgesendeten Strahlen (5, 6) voneinander entspricht.

2. Einrichtung nach Anspruch 1, dadurch gekennzeichnet, daß einer der beiden Empfänger (8) auf der Streckenvortriebsmaschine (7) nahe dem Schwerpunkt (29) bzw. der vertikalen Drehachse der Streckenvortriebsmaschine, vorzugsweise in der Drehachse, angeordnet ist.

3. Einrichtung nach einem der Ansprüche 1 oder 2, dadurch gekennzeichnet, daß die in Abstand hinter der Streckenvortriebsmaschine (7) in der Strecke angeordneten Licht- oder Laserquellen (1, 2) in einer Horizontalebene des gleichen Streckenquerschnittes und die an der Streckenvortriebsmaschine (7) angeordneten Empfänger (8, 9) in einer zur Lauffläche (23) der Maschine parallelen Ebene angeordnet sind.

4. Einrichtung nach einem der Ansprüche 1 bis 3, dadurch gekennzeichnet, daß die Empfänger (8, 9) mit einem parabolischen Reflektor (24) ausgestattet sind und der Licht- oder Laserstrahldetektor (25) im Brennpunkt des Reflektors (24) angeordnet ist.

5. Einrichtung nach einem der Ansprüche 1 bis 4, dadurch gekennzeichnet, daß die Empfänger (8, 9) von konzentrischen Flächen (26) aus durchscheinendem Material, beispielsweise einer Mattscheibe aus Glas oder Kunststoff, umgeben sind.

6. Einrichtung nach Anspruch 4 oder 5, dadurch gekennzeichnet, daß der parabolische Reflektor (24) einen Durchmesser von etwa 20 cm aufweist und von einer kreisringförmigen Mattscheibe (26) umgeben ist.

7. Einrichtung nach einem der Ansprüche 1 bis 6, dadurch gekennzeichnet, daß die Empfänger (8, 9) und die Meßvorrichtung (12) mit optischen oder akustischen Anzeigeeinrichtungen (13, 14, 20, 21) verbunden sind.

8. Einrichtung nach einem der Ansprüche 1 bis 7, dadurch gekennzeichnet, daß zusätzlich zu den Licht- oder Laserempfängern (8, 9) Schwerkraftinklinometer (16, 17), beispielsweise Drehpotentiometer oder Winkelkodierer, welche gleichfalls mit der Meßvorrichtung (12) verbunden sind, und/oder Flüssigkeitswaagen (22, 30) an der Streckenvortriebsmaschine (7) angeordnet sind.

**Claims**

1. Device for controlling the position of a tunnel boring machine by using light beams or laser beams emitted at a distance from the tunnel boring machine, comprising two receivers for light beams or laser beams (8, 9) arranged behind each other on the longitudinal axis of the tunnel boring machine with said light receivers or laser receivers (8, 9) being connected to indicators (13, 14, 20, 21) via a measuring circuit (12), characterized in that two light beam sources or laser beam sources (1, 2) are arranged at a distance from each other and transversely to the drift axis on a plane through said drift axis diverging from the vertical plane with said light or laser beam sources emitting beams (5, 6) parallel to each other and to the drift axis (4) and in that the two receivers (8, 9) for the light beams or laser beams are also arranged transversely to the longitudinal axis of the tunnel boring machine (15) and staggered and in that their lateral staggering (a) corresponds to the distance (b) between the emitted beams (5, 6).

2. Device as claimed in Claim 1, characterized in that one of the two receivers (8) is arranged on the tunnel boring machine close to the center of gravity (29) and/or the vertical axis of rotation of the tunnel boring machine, preferably in the axis of rotation.

3. Device as claimed in Claim 1 or 2, characterized in that the light sources or laser sources (1, 2) arranged at a distance from the tunnel boring machine (7) in the drift are arranged on a horizontal plane of the same drift cross section and the receivers (8, 9) mounted on the tunnel boring machine (7) are arranged on a plane parallel to the running surface (23) of the machine.

4. Device as claimed in any of Claims 1 through 3, characterized in that the receivers (8, 9) are provided with a parabolic reflector (24) and the detector for light beams or laser beams is arranged in the focal point of the reflector (24).

5. Device as claimed in any of Claims 1 through 4, characterized in that the receivers (8, 9) are surrounded by concentric surfaces (26) of translucent material, e.g., a ground glass plate or a plate of ground synthetic material.

6. Device as claimed in Claims 4 or 5, characterized in that the parabolic reflector (24) has a diameter of approximately 20 cm and is surrounded by an annularly shaped ground plate.

7. Device as claimed in any of Claims 1 through 6, characterized in that the receivers (8, 9) and the measuring circuit (12) are connected to optical or acoustic indicators (13, 14, 20, 21).

8. Device as claimed in any of Claims 1 through 7, characterized in that in addition to the receivers (8, 9) for light beams or laser beams, there are gravity inclinometers (16, 17), e.g., rotary potentiometers or angle coders which are also connected to the measuring circuit (12) and/or spirit levels (22, 30) arranged on the tunnel boring machine (7).

**Revendications**

1. Dispositif pour le contrôle de la position d'une machine de percement de tunnels utilisant des rayons lumineux ou lasers émis à distance en arrière de la machine de percement de tunnels, comprenant deux récepteurs de rayonnement lumineux ou laser (8, 9) disposés l'un derrière l'autre sur la machine de percement de tunnels, dans l'axe longitudinal de cette machine, qui sont reliés par l'intermédiaire d'un dispositif de mesure (12) à des dispositifs indicateurs (13, 14, 20, 21), caractérisé en ce que deux sources de rayonnement lumineux ou laser (1, 2) sont disposées décalées, transversalement à l'axe du tunnel, à distance l'une de l'autre dans un plan passant par cet axe et différent du plan vertical et qui émettent des rayons (5, 6) parallèles entre eux et parallèles à l'axe (4) du tunnel et en ce que les deux récepteurs de rayonnement lumineux ou laser (8, 9) sont disposés sur la machine de percement de tunnels (7) également décalés transversalement à l'axe longitudinal (15) de la machine de percement de tunnels et leur décalage latéral (a) correspondant à l'écartement (b) des rayons émis (5, 6).

2. Dispositif suivant la revendication 1, caractérisé en ce qu'un des deux récepteurs (8) est disposé sur la machine (7) de percement de tunnels à proximité du centre de gravité (29) ou de l'axe de rotation vertical de la machine de percement de tunnels, de préférence sur l'axe de rotation.

3. Dispositif suivant l'une des revendications 1 et 2, caractérisé en ce que les sources de rayonnement lumineux ou laser (1, 2) disposées dans le tunnel à distance en arrière de la machine de percement de tunnels (7) sont disposées dans un plan horizontal de la même section du tunnel et les récepteurs (8, 9) disposés sur la machine de percement de tunnels (7) sont disposés dans un plan parallèle à la surface de roulement (23) de la machine.

4. Dispositif suivant l'une des revendications 1 à 3, caractérisé en ce que les récepteurs (8, 9) sont équipés d'un réflecteur parabolique (24) et le détecteur de rayonnement lumineux ou laser (25) est disposé au foyer du réflecteur (24).

5. Dispositif suivant l'une des revendications 1 à 4, caractérisé en ce que les récepteurs (8, 9) sont entourés de surfaces concentriques (26) en matière translucide, par exemple une vitre dépolie en verre ou en matière plastique.

6. Dispositif suivant la revendication 4 ou 5, caractérisé en ce que le réflecteur parabolique (24) présente un diamètre d'environ 20 cm et est entouré d'une vitre dépolie (26) en forme de couronne circulaire.

7. Dispositif suivant l'une des revendications 1 à 6, caractérisé en ce que les récepteurs (8, 9) et le dispositif de mesure (12) sont reliés à des dispositifs indicateurs optiques ou acoustiques (13, 14, 20, 21).

8. Dispositif suivant l'une des revendications 1 à 7, caractérisé en ce qu'en plus des récepteurs de rayonnement lumineux ou laser (8, 9) des inclinomètres à gravité, (16, 17), par exemple des potentiomètres rotatifs ou des codeurs d'angles qui sont également reliés au dispositif de mesure (12) et/ou des niveaux à liquide (22, 30) sont agencés sur la machine de percement de tunnels (7).

FIG. 1

FIG. 2